# FASCICULE DE BREVET EUROPEEN

(11) **EP 0 620 621 B1**
(45) Date de publication et mention de la délivrance du brevet: **16.07.1997**
(21) Numéro de dépôt: 93500045.5
(22) Date de dépôt: 15.04.1993
(51) Int. Cl.: H02B 1/06, H02G 3/14

(54) **Un cadre embellisseur modulaire polydimensionable pour supports ou embases d'appareils électriques**
Modularer, erweiterbar Zierrahmen für Halteranordnungen oder Befestigungssockel elektrischer Einheiten
Expandable, modular decorative frame for the supports or bases of electrical units

(43) Date de publication de la demande: 19.10.1994
(73) Titulaire: MATERIAL DE INSTALACION EUNEA, S.A., E-31100 Puente la Reina (Navarra) (ES)
(72) Inventeur: Miquel Marti, Salvador, E-08025 Barcelona (ES); Pla Jensen, Eduardo, E-08028 Barcelona (ES)
(74) Mandataire: Joly, Jean-Jacques

(56) Documents cités:
- BE-A- 790 581
- CH-A- 323 736
- DE-A- 2 452 173
- DE-C- 473 263
- DE-U- 8 032 586
- DE-U- 8 405 523
- NL-A- 6 402 786
- US-A- 4 978 318
- US-A- 5 041 698

## Description

L'invention concerne, comme l'indique le préambule, UN CADRE EMBELLISSEUR MODULAIRE POLYDIMENSIONNABLE POUR SUPPORTS OU EMBASES D'APPAREILS ELECTRIQUES, du type de ceux employés pour recouvrir périphériquement le support ou embase des appareils électriques, et plus concrètement des mécanismes de petit matériel électrique, en particulier les supports d'appareils ou de mécanismes de petit matériel électrique encastré sur lesquels sont installés lesdits mécanismes, avec les moyens opératifs externes, qui sont entourés ou encadrés par lesdits cadres embellisseurs qui complètent le fini esthétique extérieur.

L'objet de l'invention est conçu pour les systèmes de support de petit matériel électrique de nature modulaire où un cadre unique polydimensionnable par répétition successive du dimensionnement étalon permet d'obtenir des cadres simples, doubles, triples, etc., qui peuvent être disposés en ligne, aussi bien dans le sens horizontal que vertical ou entrecroisés dans les deux sens, en combinant des cadres de ces caractéristiques.

En particulier, l'objet de l'invention est conçu et développé en vue d'être implanté dans le système modulaire unique d'appareils ou de mécanismes électriques objet du Brevet num. ES 545.782 (nº 3620416 en Allemagne; nº 8607861 en France; nº 1197778 en Italie; nº 83108 au Portugal) de la demanderesse et, plus concrètement, en vue de son incorporation et montage sur les supports, eux aussi brevetés, de la demanderesse de type modulaire unique disposant de moyens incorporés pour recevoir, par simple emboîtage à force, les cadres objet de l'invention, pourvus essentiellement de moyens stratégiques d'ancrage.

Les systèmes de solution qui peuvent être relevés dans l'état de la technique pour ce type de matériel sont multiples et divers. Les cadres embellisseurs pour ce genre d'objets, plus concrètement pour les appareils électriques, sont développés en fonction des caractéristiques de l'appareil électrique, du support qui les soutient et des moyens, dessin ou particularités que ceux-ci présentent.

Généralement, les cadres sont des corps indépendants qui servent uniquement pour un appareil ou mécanisme et/ou, dans certains cas, en fonction du système, pour deux mécanismes dans la mesure où ceux-ci sont disposés sur un seul support.

Egalement, des cadres doubles, triples ou multiples ont été conçus, mais en polydimensionnant leurs dimensions pour pouvoir pallier aux écarts d'emboîtage et en s'arrangeant pour que les moyens de fixation du cadre se trouvent, généralement, hors du support, avec les travaux supplémentaires de fixation que cela implique, ou en dotant en sus lesdits supports de moyens supplémentaires pour cette fonction et, en tout cas, en faisant que ne puisse être répété un même cadre pour différentes solutions.

En définitive, le cadre de l'invention n'est pas compris dans l'état de la technique puisqu'il est conçu et développé en fonction d'un système modulaire se basant sur les systèmes précédents des propres brevets de la demanderesse, lesquels proposent un système modulaire unique pour les mécanismes, Brevet num. 545.782, un système de support ou châssis avec des moyens pour recevoir un ou deux mécanismes dans n'importe quelle position, et au moyen d'un accouplement modulaire réversible, Modèle d'Utilité num. 293.035, et un support unique multicombinable par assemblage qui dispose de moyens incorporés fondamentaux pour le cadre objet de cette invention.

Pour ce qui est des brevets DE-A-2452173 et BE-A-790581 de l'état de la technique, elles reprennent deux versions pour la fabrication de cadres en différentes dimensions, pour installation de petits mécanismes électriques.

Plus précisément, l'objet des brevets en question se réfère à une manière de surdimensionner les modules d'installation par association les uns avec les autres.

Le brevet DE-A-23452173 concerne plus précisément les plaques ou bases servant à l'installation des mécanismes qui, munis de moyens latéraux d'emboîtement, s'assemblent pour se multiplier.

La solution apportée par le brevet BE-A-790581 propose également un assemblage emboîté mais la disposition a lieu par assemblage linéaire, non latéral, et comporte deux fragments modulaires, un intermédiaire comportant deux moitiés symétriques et un autre extrême fermant la pièce.

La formule d'assemblage emboîté proposée dans les brevets DE-A-2452173 et BE-A-790581 décrit un moyen d'élargissement ou de répétition du cadre.

Les cadres sont polydimensionnables en fonction des moyens d'ancrage originaux que l'invention incorpore.

Le format du cadre en différentes tailles est directement moulé avec les mesures normalisées, selon les dimensions souhaitées.

La répétition des moyens d'ancrage en rend plus facile la moulure.

Cette répétition des moyens d'ancrage permet leur enclavement en un, deux, trois ou plusieurs châssis métalliques de base, alignés verticalement ou horizontalement.

Le but de l'invention est de fournir un cadre embellisseur unique aux caractéristiques modulaires et qui, polydimensionné par répétition de ses dimensions, au format normalisé, devient un cadre double, triple ou multiple, sans s'attaquer, pour autant, aux caractéristiques structurelles ou de dessin.

L'invention concerne un cadre embellisseur modulaire polydimensionnable pour supports ou embases d'appareils électriques présentant les caractéristiques énoncées dans la revendication 1.

L'invention se propose également de doter ledit cadre de moyens de fixation incorporés, plus concrètement de quatre points d'ancrage internes, qui sont les mêmes en nombre et emplacement aussi bien pour un cadre simple que double, triple ou multiple, de telle sorte qu'un seul moule extensible ou prolongeable serait suffisant pour la fabrication des différents formats; y compris, les points d'ancrage nécessaires pour les bâtis auxquels est appliqué le cadre, suivant son dimensionnement.

Selon l'invention lesdits moyens d'ancrage sont seulement au nombre de quatre et situés chacun d'eux sur chacun des sommets du cadre (angle intérieur) dans une projection bissectrice audit sommet.

L'invention se propose également de donner une projection intérieure prolongée auxdits ancrages aux fins d'assemblage et de montage en des points relativement éloignés des bords du support pour les camoufler ou les masquer en dessous des moyens opératifs des mécanismes électriques.

De même, l'invention vise à ce que lesdits moyens d'ancrage soient situés au-dessous du bord extérieur du cadre et, plus concrètement, en faisceaux avec la base ou plan inférieur du cadre pour longer convenablement la hauteur des moyens opératoires desdits mécanismes électriques.

L'invention propose également que les moyens d'ancrage soient dotés d'une certaine élasticité et d'un onglet pour en faciliter le montage et céder à la pression d'une meilleure fixation à force.

L'invention propose également d'insérer des moyens complémentaires de verrouillage pour assurer l'ancrage sur des noyaux ou moyens de projection diamétrale progressive, décroissante ou croissante, en fonction d'où on regarde.

L'invention se propose de fournir un cadre embellisseur polydimensionnable diaphane, soit sans subdivisions.

Le cadre, selon l'invention, est une moulure au format quadrangulaire régulier, aux dimensions internes conformes aux normes et, par conséquent et principalement, à la résultante du système modulaire unique du Brevet num. ES 545.782, au profil externe en semi-arche convexe, les plans intérieurs du creux étant droits, ou perpendiculaires à la phase.

Une autre caractéristique de l'invention est que ledit cadre présente des moyens d'ancrage femelles disposés à l'intérieur du cadre en une projection bissectrice à chaque sommet et en faisceaux avec le plan inférieur de celui-ci.

Une autre caractéristique de l'invention est que lesdits ancrages femelles comportent une ramification plane de composition géométrique mixte en deux tronçons qui ont une extrémité libre et l'autre rattachée au sommet; la première étant habilitée pour entrer, s'emboîter et se fixer à force sur les moyens de support métallique, l'autre étant dotée d'un certain mouvement d'élasticité pour faciliter ladite fonction et fixer la palace du mécanisme électrique.

Une autre caractéristique de l'invention est que l'extrémité libre de la ramification comporte une sertissure ou un emboîtage en forme de pince constitué par une fourchette radiale en forme d'anneau incomplet, avec une ouverture ou entrée à 45º et des chants verticaux chanfreinés ou en biseau, de sorte que ladite ouverture à 45º en facilite l'entrée, sa projection biseautée assurant l'emboîtage progressif et la fourchette intérieure fermant à force contre les moyens mâles disposés sur le bâti support des mécanismes électriques.

Une autre caractéristique de l'invention est que la fourchette annulaire ouverte présente, intérieurement et centralement, une nervure torique, de préférence centrée, qui fait fonction d'encastrement mâle ou de segment d'emboîtage sur le membre mâle du bâti sur lequel elle est ancrée.

Une autre caractéristique de l'invention est que le second tronçon de la ramification comporte un anneau tangent à ladite fourchette, interrompu ou coupé radialement par une rainure bissectrice qui se prolonge en coupant une partie du sommet du cadre de même que, naturellement, un gousset d'angle de faible épaisseur à la base dudit anneau ou bague.

Une autre caractéristique de l'invention est que le sommet dudit cadre est un angle concave au faible rayon.

Une autre caractéristique de l'invention est que les moyens mâles d'ancrage sur le bâti-embase sont des tétons cylindriques de forme légèrement conique en projection renversée, dont le diamètre est calculé en rapport avec le diamètre intérieur de l'ancrage femelle, lesdits tétons étant tangents au rebord intérieur du creux du support, pour des raisons stratégiques d'espace, pour permettre l'ouverture des ancrages femelles du cadre et franchir les coins desdits rebord et téton.

Les caractéristiques de l'invention apparaîtront plus clairement à l'aide de la description qui va suivre, faite en référence à la planche de dessins ci-annexée et où sont représentés, de manière quelque peu schématique et uniquement à titre d'exemple, les détails préférés de l'invention.

Sur les dessins:

La figure 1 est une vue en perspective d'ensemble d'un cadre embellisseur selon l'invention, en version simple, et un détail grossi d'un des ancrages.

La figure 2 est un détail grossi en plan d'un exemple, en position de fermeture, d'un ancrage.

La figure 3 est une vue en coupe suivant la ligne AA-AA de la figure 2.

La figure 4 est une vue en coupe suivant la ligne BB-BB de la figure 2.

La figure 5 est une projection en perspective vue en plan d'un ensemble en position inverse, d'un support, cadre embellisseur et bâti pour un jeu de mécanisme électrique.

La figure 6 est une projection en perspective vue de côté d'un ensemble analogue au précédent.

La figure 7 est une vue en perspective d'un cadre double, avec un détail grossi des ancrages centraux.

Les figures 8 et 9 sont des vues en perspective de cadres triples et quadruples.

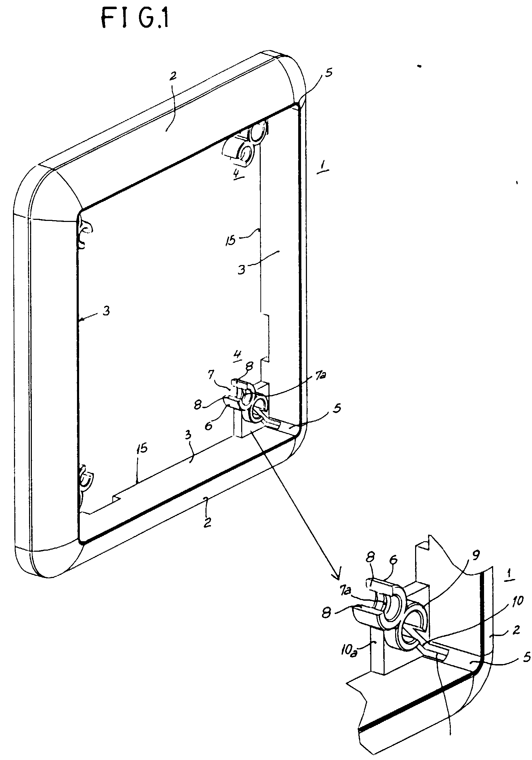

En référence auxdites illustrations et en mettant l'accent sur la vue d'ensemble de la figure 1, celle-ci montre un cadre simple (1) au format général quadrangulaire régulier constitué par une moulure (2) aux sommets (5) en arcs concaves au faible rayon; un profil extérieur (2) en semi-arche convexe; les plans internes (3) droits à la phase et des moyens d'ancrage (4) femelles constitués par une ramification bissectrice aux sommets (5) et en faisceaux ou de niveau avec le plan inférieur ou base (15) du cadre (1).

La ramification (4) constituant l'ancrage femelle est composée de deux tronçons, l'un en surplomb ou libre qui constitue l'organe de jonction et de fixation et qui comporte une fourchette annulaire coupée (6), pourvue d'une ouverture radiale (7) à ± 45º, convenablement évasée, avec ses chants verticaux en chanfrein rentrant (8), au diamètre calculé pour s'emboîter sur la sertissure ou emboîtement mâle (12) du bâti-support (14) de l'appareil électrique.

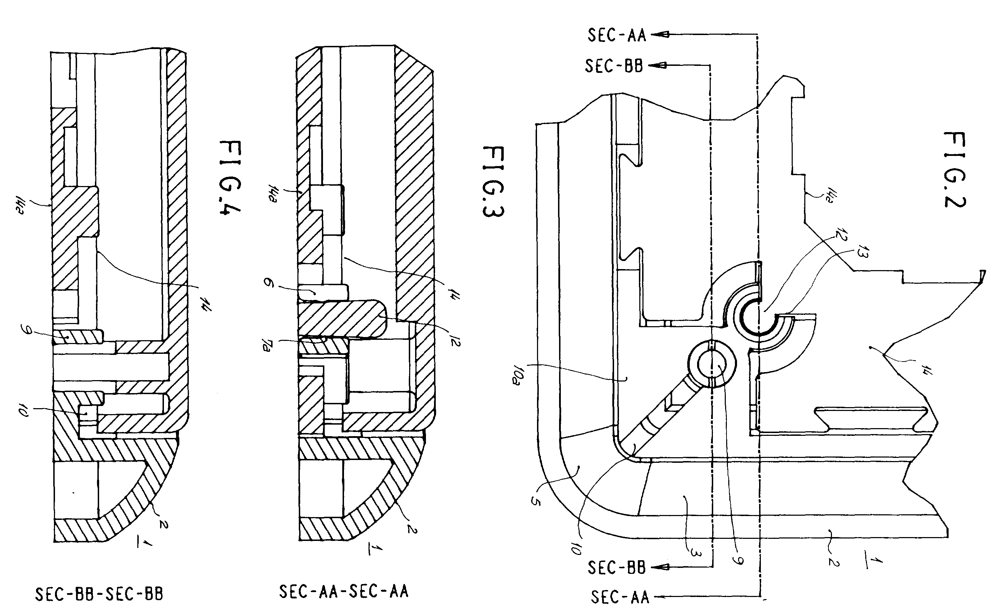

A ces fins, la fourchette (6) comporte à l'intérieur une nervure torique (7a) faisant office de sertissure ou emboîtement mâle pour le verrouillage (16) sur le téton d'ancrage (12), Fig. 2 à 4, de la plaque support (14a).

Le tronçon non libre de la ramification d'ancrage femelle (4) comporte une nervure annulaire (9) tangente à la fourchette (6) et associée à un gousset plat (10a) qui couvre le sommet (5), lesquels sont coupés par une rainure (10) qui suit axialement la bissectrice du sommet (5) et coupe ce dernier sur une portion (11). La rainure (10-11) confère de l'élasticité à la ramification (4), notamment pour les fonctions requises pour l'ancrage de raccordement au téton (12) des supports (1) des appareils électriques (Fig. 2 à 4) qui sont représentés plus en détail sur l'agrandissement de la figure 1 des dessins. L'emboîtement qui est réalisé pour le raccordement de l'ancrage (4) aux moyens mâles (12) du support (14a) (figures 2 à 4) s'établit entre la fourchette (6) et un téton cylindrique (12) coniforme en projection inversée adossé ou tangentiel aux coins (13) de l'encadrement intérieur (14) du support (14a). Les chanfreins rentrants (8) de l'ouverture radiale (7) facilitent l'entrée de l'ancrage (4) jusqu'à ce que le téton (12) soit verrouillé, de sorte que ladite ouverture (7) s'emboîte ou épouse le coin (13) de l'encadrement intérieur (14), le téton (12) étant verrouillé grâce à la nervure torique (7a) faisant fonction de segment d'emboîtage, de façon que la rainure (10-11) admette toutes éventuelles sollicitations d'expansion de l'ancrage (4) quand l'ouverture (7) exige, en sa convergence, un certain effort de dilatation pour que le téton ou emboîtement mâle (12) s'emboîte à force, alors que le nerf circulaire (9) définit un logement pour encaissement de la place extérieure du mécanisme électrique.

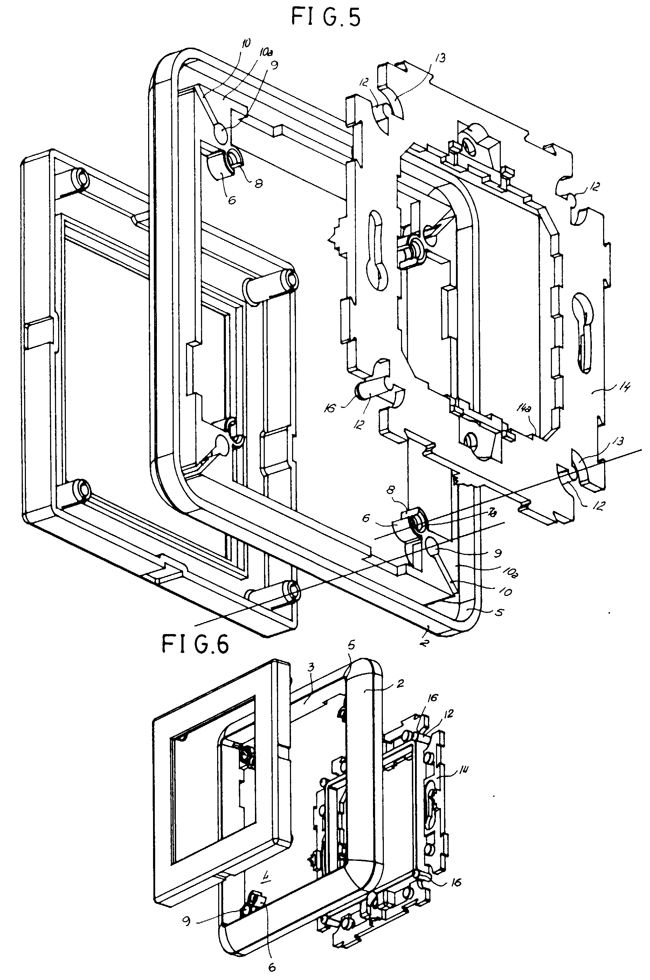

A ces fins, le téton (12) peut comporter en outre une entaille (16) (Fig. 5 et 6) comme moyen d'emboîtage femelle pour empêcher qu'il ne sorte fortuitement tout en imposant un centrage adéquat du cadre.

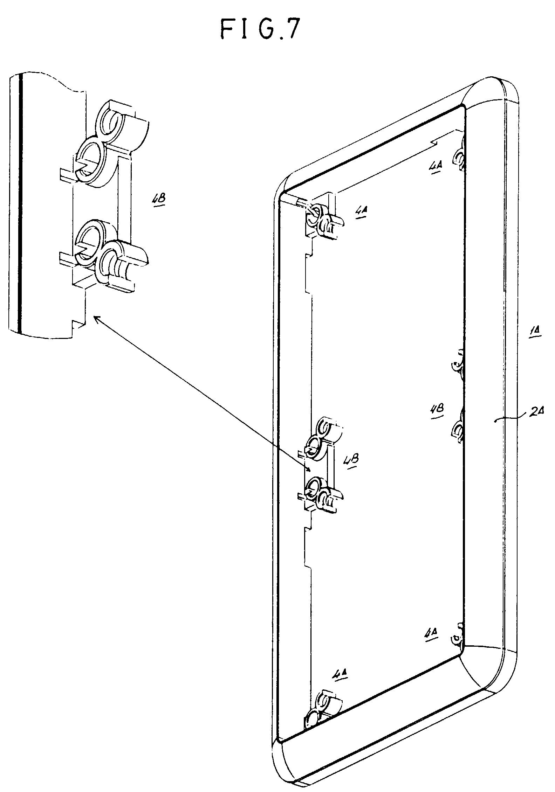

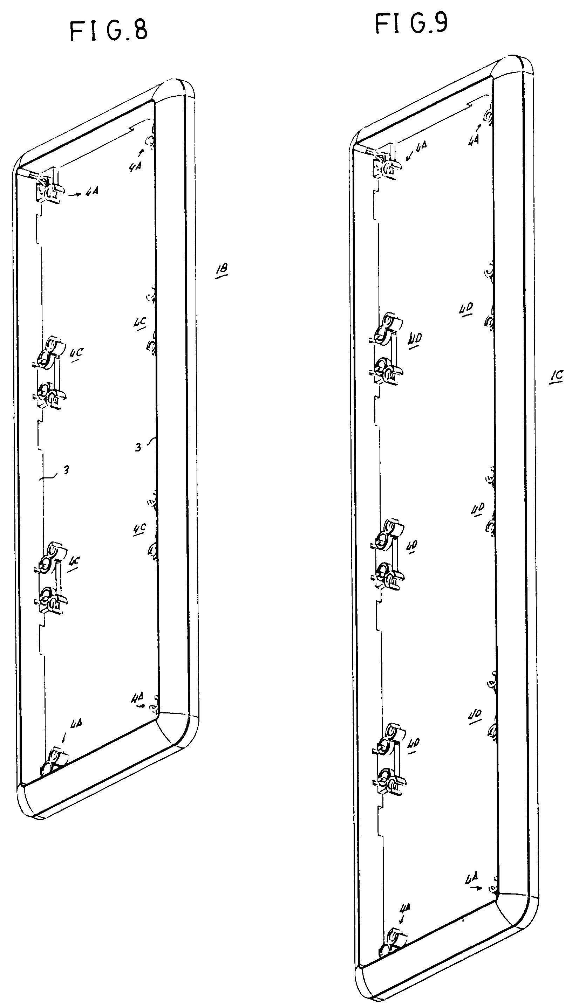

Cette solution est également valable et identique pour un cadre embellisseur double, comme le montre la figure 7, triple (fig. 8), quadruple (fig. 9) ou successives si nécessaire.

En nous reportant auxdites représentations (figures 7, 8 et 9), il suffit de dimensionner proportionnellement l'ensemble (1A) pour obtenir un cadre double (2A) pourvu sur ses sommets de moyens d'ancrage femelles identiques (4A), d'autres (4B) centraux pour pouvoir assurer ou fixer, en utilisant les emboîtements mâles respectifs (12) des supports (14a) le cadre (2A) qui, comme on peut l'observer, a seulement été prolongé dimensionnellement sur deux de ses côtés parallèles longitudinaux tout en conservant la dimension de base des autres côtés parallèles transversaux suivant le modèle ou patron de base de cadre modulaire simple (1) (figure 1).

De la même manière, nous avons dimensionné l'ensemble (1B) (fig. 8) pour obtenir un cadre triple (2B) pourvu d'ancrages (4A) dans ses coins et de deux jeux d'ancrages doubles (4C) de chaque côté (3) du cadre; un ensemble (1C) pour obtenir un cadre quadruple (2C) pourvu d'ancrage (4A) dans chaque coin et de trois jeux d'ancrages doubles (4D) de chaque côté (3) du cadre et ainsi de suite, suivant la combinaison linéaire ou unidirectionnelle voulue ou dans la projection croisée désirée.

## Revendications

1. CADRE EMBELLISSEUR MODULAIRE POLYDIMENSIONNABLE POUR SUPPORTS OU EMBASES D'APPAREILS ELECTRIQUES, qui est constitué par un cadre modulaire au format normalisé, caractérisé en ce qu'il comporte une moulure carrée-régulière (2) aux coins symétriques (5) au profil externe en semi-arche convexe (2) et aux plans internes (3) droits perpendiculaires à la base, avec des moyens d'ancrage femelles (4) se projetant axialement suivant la bissectrice des sommets (5) desdits coins, substantiellement plats et en faisceaux ou de niveau avec la base ou face inférieure (15) du cadre (1).

2. CADRE EMBELLISSEUR MODULAIRE POLYDIMENSIONNABLE POUR SUPPORTS OU EMBASES D'APPAREILS ELECTRIQUES, qui comporte une moulure (1) au format carré normalisé, selon la revendication 1, caractérisé en ce qu'il est seulement nécessaire de dimensionner modulairement, de manière répétée et successive, deux côtés parallèles longitudinaux du cadre (1), tout en maintenant invariablement symétriques les sommets (5), pour obtenir des versions doubles, triples ou successives desdits cadres (1) et/ou en incorporant des moyens d'ancrage femelles (4) équidistant, proportionnels à chaque dimensionnnement.

3. CADRE EMBELLISSEUR MODULAIRE POLYDIMENSIONNABLE POUR SUPPORTS OU EMBASES D'APPAREILS ELECTRIQUES, selon la revendication 1, caractérisé en ce que les ancrages femelles (4) comprennent une ramification radiale coïncidente avec la bissectrice de l'angle (5) composée de deux tronçons, l'un libre ou en surplomb, d'emboîtage femelle (6) et l'autre interne (10a), élastique et de raccordement audit sommet (5).

4. CADRE EMBELLISSEUR MODULAIRE POLYDIMENSIONNABLE POUR SUPPORTS OU EMBASES D'APPAREILS ELECTRIQUES selon la revendication 3, caractérisé en ce que le tronçon libre de la ramification d'ancrage (4) est une fourchette annulaire (6) pourvue d'une ouverture radiale (+/- 45º) (7) comportant des chants verticaux en chanfrein ou en biseau rentrant (8) et, à l'intérieur, d'une nervure torique centrée (7a) qui fait fonction d'emboîtement mâle de verrouillage.

5. CADRE EMBELLISSEUR MODULAIRE POLYDIMENSIONNABLE POUR SUPPORTS OU EMBASES D'APPAREILS ELECTRIQUES selon la revendication 3, caractérisé en ce que le tronçon interne élastique et de raccordement au sommet d'ancrage comporte une nervure annulaire (9) associée à un gousset plat d'angle (10a) et coupée par une rainure bissectrice (10) axiale au sommet (5) qu'elle coupe aussi sur une portion (11).

6. CADRE EMBELLISSEUR MODULAIRE POLYDIMENSIONNABLE POUR SUPPORTS OU EMBASES D'APPAREILS ELECTRIQUES selon l'une quelconque des revendications 1 et 3 à 5, caractérisé en ce que pour son enclenchement, les moyens mâles d'ancrage comportent un téton cylindrique (12) au diamètre adapté au diamètre intérieur de la fourchette (6) de l'ancrage (4), adossé et tangent aux arêtes (13) de l'encadrement intérieur (14) des bâtis-embases (14a) de projection coniforme inversée et doté complémentairement d'une entaille (16), torique elle aussi, en guise d'emboîtement femelle de verrouillage.

## Patentansprüche

1. Modularer, vielfach erweiterbarer Zierrahmen für Träger oder Sitzflächen elektrischer Geräte, der aus einem modularen Rahmen mit normalisiertem Format besteht, dadurch gekennzeichnet, daß er eine regelmäßige viereckige Leiste (2) umfaßt, mit symmetrischen Ecken (5), einem äußeren konvexen, halbbogenförmigen Profil (2) und inneren geraden, zur Grundfläche senkrechten Ebenen (3), mit hohlen, im wesentlichen flachen Verankerungsmitteln (4), die sich axial gemäß der Halbierende der Spitzen (5) der besagten Ecken, und gebündelt oder in gleicher Höhe mit der Grundfläche oder unteren Seite (15) des Rahmens (1) erstrecken.

2. Modularer, vielfach erweiterbarer Zierrahmen für Träger oder Sitzflächen elektrischer Geräte, der eine Leiste (1) mit normalisiertem viereckigem Format umfaßt, gemäß Anspruch 1, dadurch gekennzeichnet, daß man nur braucht, zwei parallele Längsseiten des Rahmens (1) modular, wiederkehrend und nacheinander zu bemessen während man die Spitzen (5) unverändert symmetrisch aufrechterhält, um zweifache, dreifache, vierfache oder nacheinanderfolgende Ausführungen der besagten Rahmen (1) zu erreichen, und/oder während man hohle Verankerungsmittel (4) einbaut, die gleich weit entfernt sind und zu jedem Format proportional sind .

3. Modularer, vielfach erweiterbarer Zierrahmen für Träger oder Sitzflächen elektrischer Geräte gemäß Anspruch 1, dadurch gekennzeichnet, daß die hohlen Verankerungsmittel (4) eine radiale, mit der Halbierende der Ecke (5) übereinstimmende Verzweigung umfaßen, die aus zwei Abschnitten besteht, deren einer ein freier oder vorstehender Abschnitt (6) zur hohlen Einfügung ist und deren anderer ein innerer elastischer Abschnitt (10a) zum Anschluß an der besagten Spitze (5) ist.

4. Modularer, vielfach erweiterbarer Zierrahmen für Träger oder Sitzflächen elektrischer Geräte gemäß Anspruch 3, dadurch gekennzeichnet, daß der freie Abschnitt der Verankerungsverzweigung (4) eine rohrförmige Gabel (6) ist, die einerseits eine radiale (±45°) Öffnung (7) umfaßt, die senkrechte Kanten (8) mit nach innen gerichteten Fasen oder Schrägflächen aufweist, und die andererseits, innen, eine zentrierte torische Rippe (7a) umfaßt, die sich nach Art eines vorspringenden Einfügungsmittels verhält.

5. Modularer, vielfach erweiterbarer Zierrahmen für Träger oder Sitzflächen elektrischer Geräte gemäß Anspruch 3, dadurch gekennzeichnet, daß der innere elastische, den Anschluß an der Verankerungsspitze vermittelnde Abschnitt eine ringförmige Rippe (9) aufweist, die mit einer flachen Eckversteifung (10a) verbunden ist und die durch eine axiale, auf der Halbierende der Spitze (5) liegende Nut (10) geschnitten ist, die einen Teil (11) der Spitze (5) auch schneidet.

6. Modularer, vielfach erweiterbarer Zierrahmen für Träger oder Sitzflächen elektrischer Geräte gemäß irgendeinem der Ansprüche 1 und 3 bis 5, dadurch gekennzeichnet, daß, zur Verrastung desselbens, die vorspringenden Verankerungsmittel einen zylindrischen Ansatz (12) aufweisen, dessen Durchmesser dem inneren Durchmesser der Gabel (6) des Verankerungsmittels (4) angepaßt ist, wobei der Ansatz (12) an den Kanten (13) des inneren Rahmens (14) der Gehäuse oder Sitzflächen (14a) anliegt und tangiert, eine umgekehrte kegelförmige Projektion aufweist und zusätzlich mit einer, ebenfalls torischen Kerbe (18) ausgerüstet ist, die sich nach Art eines hohlen Verrastungseinfügunsmittels verhält.

## Claims

1. Polydimensional modular decorative frame for supports or bases for electrical apparatus, which is constituted by a modular frame of standardized format, characterized in that it comprises a regular square moulding (2) with symmetrical corners (5) of convex semi-arch outer profile (2) and straight inner planes (3) perpendicular to the base, with female anchoring means (4) projecting axially along the bisectrix of the apices (5) of said corners, substantially flat and in bundles or level with the base or lower face (15) of the frame (1).

2. Polydimensional modular decorative frame for supports or bases of electrical apparatus, which comprises a moulding (1) of standardized square format, according to Claim 1, characterized in that it is only necessary to dimension modularly, in repeated and successive manner, two longitudinal parallel sides of the frame (1), while maintaining the apices (5) invariably symmetrical, to obtain double, triple or successive versions of said frames (1) and/or incorporating equidistant female anchoring means (4) proportional to each dimensioning.

3. Polydimensional modular decorative frame for supports or bases of electrical apparatus according to Claim 1, characterized in that the female anchorings (4) comprise a radial ramification merging with the bisectrix of the angle (5) composed of two sections, one free or in overhang, for female fitting (6) and the other internal (10a), elastic and for connection to said apex (5).

4. Polydimensional modular decorative frame for supports or bases of electrical apparatus according to Claim 3, characterized in that the free section of the anchoring ramification (4) is an annular fork (6) provided with a radial opening (+/- 45°) (7) comprising vertical edges in re-entrant chamfer or bevel (8) and, inside, with a centred toric rib (7a) which acts as male fitting for locking.

5. Polydimensional modular decorative frame for supports or bases of electrical apparatus according to Claim 3, characterized in that the inner elastic section for connection to the anchoring apex comprises an annular rib (9) associated with a flat angle gusset (10a) and intersected by a bisectrix groove (10) axial to the apex (5) that it also intersects on a portion (11).

6. Polydimensional modular decorative frame for supports or bases of electrical apparatus according to any one of Claims 1 and 3 to 5, characterized in that, for its locking, the male anchoring means comprise a cylindrical stud (12) of diameter adapted to the inner diameter of the fork (6) of the anchoring (4) abutting against and tangential to the edges (13) of the inner framework (14) of the base-frames (14a) of reversed cone-formed projection and provided complementarily with a likewise toric notch (16) acting as female fitting for locking.
